# DEMANDE DE BREVET EUROPEEN

(11) **EP 3 382 270 A1**
(43) Date de publication de la demande: **03.10.2018**
(21) Numéro de dépôt: 18164169.7
(22) Date de dépôt: 27.03.2018
(51) Int. Cl.: F21V 8/00

(54) **GUIDE DE LUMIERE COURBE PROPAGATEUR DE RAYONS LUMINEUX**

(30) Priorité: 31.03.2017 FR 1752785
(71) Demandeur: Valeo Vision, 93012 Bobigny Cedex (FR)
(72) Inventeur: GODBILLON, Vincent, 93012 BOBIGNY Cedex (FR); VALOIS, Christophe, B-7822 MESLIN L'EVEQUE (BE)
(74) Mandataire: Valeo Vision

(57) **Abrégé**

L'invention a pour objet un guide de lumière (10) destiné à propager des rayons lumineux émis depuis au moins une source lumineuse (40), le guide de lumière (10) comprenant au moins trois parties (10a, 10b, 10c) successives selon un sens de propagation des rayons lumineux depuis la ou les sources lumineuses (40), les trois parties successives (10a, 10b, 10c) étant :
- une première partie (10a),
- une deuxième partie (10b), située en sortie de la première partie (10a), la deuxième partie (10b) suivant une courbe définie selon un rayon de courbure principal (RP), et
- une troisième partie (10c) située en sortie de la deuxième partie (10b).

Selon l'invention, au moins une fente (15) est ménagée dans la deuxième partie (10b), la ou les fente(s) (15) définissant au moins deux sous-guides (11, 12), lesdits sous-guides (11,12) se rejoignant de manière à former la troisième partie (10c) du guide de lumière (10).

## Description

Le domaine de la présente invention est celui des guides propagateurs de rayons lumineux et plus particulièrement des guides destinés à être installés dans des modules lumineux de véhicules automobiles pour assurer une fonction d'éclairage et/ou de signalisation et/ou d'éclairage intérieur.

De manière connue en soi, les guides propagateurs de rayons lumineux aussi appelés guides de lumière sont employés afin de maîtriser la forme de propagation des rayons lumineux, notamment dans un but visuel et esthétique.

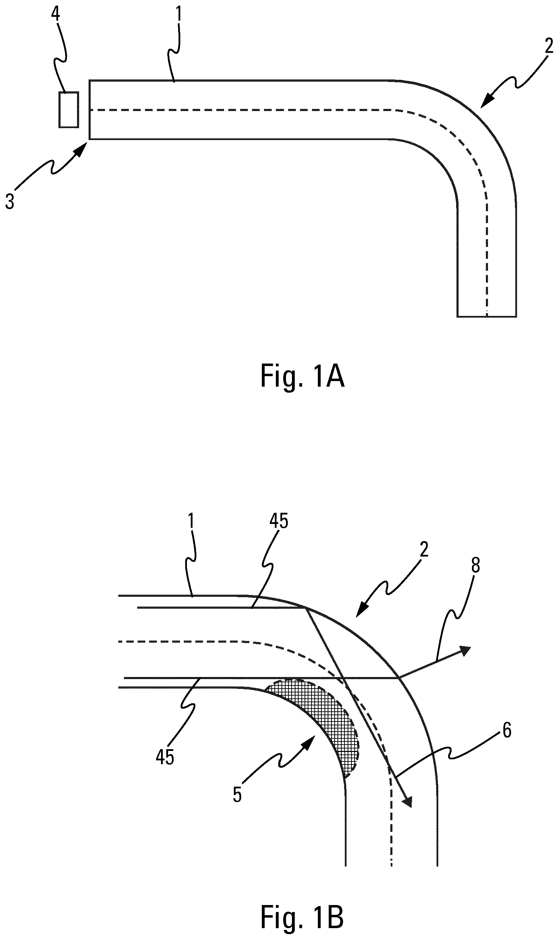

Des inconvénients concernant les guides de lumière de l'art antérieur comprenant au moins une partie courbe sont illustrés par les figures 1A à 1D. La figure 1A montre un guide de lumière 1 comprenant une partie courbe 2. Une source lumineuse 4 est placée à une extrémité 3 du guide de lumière 1. La figure 1B représente un agrandissement de la partie courbe 2 du guide de lumière 1 traversé par des rayons lumineux 45 émis par la source lumineuse 4. En fonction de l'angle d'incidence formé entre les rayons 45 issus de la source lumineuse 4 et les parois du guide de lumière 1, il est généré des rayons lumineux réfléchis 6 et des rayons lumineux réfractés 8 par les parois du guide de lumière 1.

Un premier inconvénient concerne la présence des rayons réfractés 8 dans des zones non souhaitées du guide de lumière 1 et notamment dans la partie courbe 2 du guide de lumière 1. Ces rayons réfractés 8 représentent à la fois une fuite importante de lumière dans la partie courbe 2 du guide de lumière 1 et un éclairement de l'environnement extérieur situé autour de la partie courbe 2. Ainsi, de tels guides de lumière 1 présentent un aspect visuel et esthétique non totalement maîtrisé du fait que la propagation des rayons lumineux souhaitée n'est pas atteinte. D'autre part les rayons réfractés 8 sont perdus et l'efficacité photométrique du guide de lumière s'en trouve alors affectée.

Par ailleurs, un deuxième inconvénient concerne les guides de lumières 1 courbe ayant un faible rayon de courbure. Un rayon de courbure est dit faible lorsqu'il est inférieur à N fois le diamètre du guide de lumière 1, avec N étant fonction du matériau du guide de lumière et de son indice optique.

Indépendamment de l'indice, on comprend que si le rayon de courbure est supérieur égal à N fois le diamètre du guide de lumière avec une valeur N grande, aucune gêne notable dans la propagation des rayons lumineux n'est relevée, c'est-à-dire que l'aspect allumé du guide ainsi que son rendement photométrique sont satisfaisants.

Dans le cas d'un rayon de courbure faible, une grande partie de la lumière peut s'échapper du guide dans le coude. Comme cela est illustré notamment par la figure 1B, les rayons lumineux 45 émis par la source lumineuse 4, qu'ils soient réfléchis 6 ou réfractés 8, ne passent pas dans une zone interne 5 située au creux de la partie courbe 2. Cette zone interne 5 de la courbe du guide de lumière 1 se retrouve donc non éclairée, et forme une zone dite ombragée représentée par les hachures sur la figure 1B.

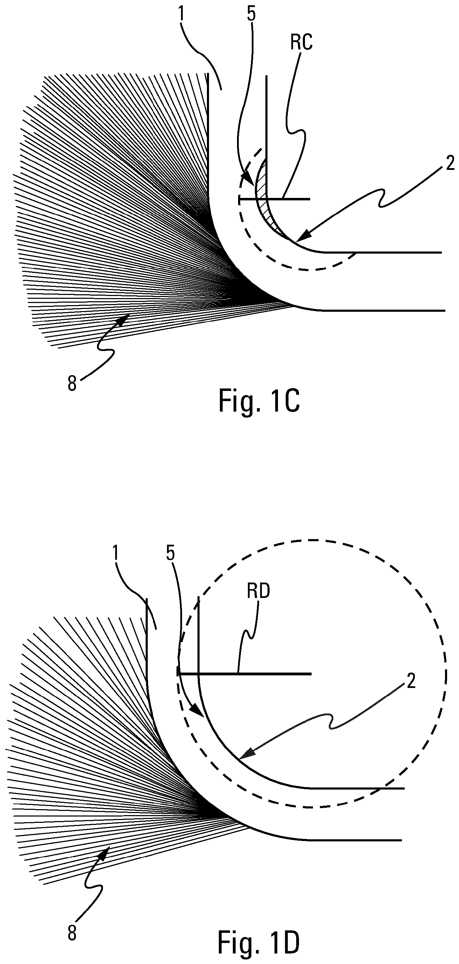

Les figures 1C et 1D montrent des parties courbes 2 de guides de lumière 1 selon l'art antérieur, avec sur la figure 1C un premier guide de lumière ayant un rayon de courbure RC (figure 1C) dit faible, en référence à la définition donnée ci-dessus, tandis que le rayon de courbure RD du deuxième guide de lumière de la figure 1D n'est pas faible, c'est-à-dire qu'il est supérieur ou égal à N fois le diamètre du guide de lumière. On observe alors que lorsque le rayon de courbure de la partie courbe 2 du guide de lumière 1 est faible, les rayons lumineux émis par la source lumineuse 4, qu'ils soient réfléchis 6 ou réfractés 8, ne passent pas dans la zone interne 5 située au creux de la partie courbe 2 et forme une zone ombragée représentée par les hachures sur la figure 1C.

Ainsi, pour des guides de lumière 1 ayant un rayon de courbure faible, en plus de présenter une fuite importante de lumière dans la partie courbe 2, visible par les rayons réfractés 8, la zone interne 5 située au creux de chaque partie courbe 2 n'est pas traversée par les rayons lumineux, qu'ils soient émis 45, réfléchis 6 ou réfractés 8. Cette zone interne ainsi ombragée 5 modifie alors l'aspect visuel que l'on souhaite donner au guide de lumière à l'intérieur duquel se propage des rayons lumineux. En outre on observe sur la figure 1D, où le rayon de courbure RD dans la partie courbe 2 du guide n'est pas faible, que la fuite de lumière est réduite, c'est-à-dire que la quantité de rayons réfractés 8 hors du guide, et ainsi perdus, est inférieure à la quantité de rayons réfractés 8 hors du guide, présenté sur la figure 1C, dont le rayon de courbure RC dans la partie courbe 2 du guide est faible. Ainsi le guide présentant un rayon de courbure faible présente un rendement photométrique dégradé.

Afin de préservé un bon rendement photométrique et d'éviter cette zone ombragée et ce défaut esthétique créé par la modification de cet aspect visuel d'ensemble, l'utilisation de guides de lumière présentent un ou plusieurs rayons de courbure faibles est limitée. Cette contrainte est toutefois préjudiciable dans un contexte où la demande client impose de plus en plus la mise en oeuvre de guide de lumière présentant des rayons de courbures faibles.

La présente invention a donc pour but de remédier à ces inconvénients en proposant un guide de lumière destiné à propager des rayons lumineux émis depuis au moins une source lumineuse, le guide de lumière comprenant au moins trois parties successives selon un sens de propagation des rayons lumineux depuis la ou les sources lumineuses, les trois parties successives étant une première partie, une deuxième partie située en sortie de la première partie, la deuxième partie suivant une courbe définie selon un rayon de courbure principal, et une troisième partie située en sortie de la deuxième partie.

Selon l'invention, au moins une fente est ménagée dans la deuxième partie, la ou les fente(s) définissant au moins deux sous-guides, lesdits sous-guides se rejoignant de manière à former la troisième partie du guide de lumière.

La présence d'une telle fente et la division du guide de lumière en plusieurs sous-guides permet d'éviter à la fois la présence d'une zone d'ombre au creux de la partie courbe tout en réduisant la perte de lumière due à la réfraction des rayons lumineux.

Selon différentes caractéristiques de l'invention prises seules ou en combinaison, on pourra prévoir que :
- Les sous-guides se rejoignent à l'opposé de la troisième partie de manière à former la première partie. En d'autres termes, les sous guides prennent naissance à une jonction entre la première partie et la deuxième partie.
- La deuxième partie et la troisième partie sont issues de matière. Ainsi, on comprend que la deuxième partie et la troisième partie sont monobloc.
- La première partie et la deuxième partie sont issues de matière. Ainsi, on comprend que la première partie et la deuxième partie sont monobloc.
- La première, la deuxième et la troisième partie sont issues de matière. Ainsi, on comprend que ces trois parties sont monobloc.
- Les sous-guides s'étendent le long de la fente.
- Chaque sous-guide présente un rayon de courbure, dit rayon de courbure général, inscrit dans un cercle concentrique à un cercle dans lequel est inscrit le rayon de courbure principal définissant la courbe suivie par la deuxième partie.
- L'au moins une fente suit un rayon de courbure principal confondu avec le rayon de courbure principal définissant la courbe suivie par la deuxième partie.
- L'au moins une fente s'étend sur toute une hauteur du guide de lumière. On entend par là qu'il n'y a pas de pont de matière qui relie les deux sous-guides. Ainsi, les sous-guides sont indépendants les uns des autres.
- L'au moins une fente présente au moins une extrémité arrondie ou biseautée. De telles extrémités permettent de faciliter le moulage et le démoulage des sous-guides lors de la fabrication du guide de lumière selon l'invention.
- L'au moins une fente présente une largeur maximale supérieure ou égale à 2 millimètres. Cette épaisseur d'au moins 2 millimètres permet d'assurer un bon moulage de la fente lors de la fabrication du guide selon l'invention. L'épaisseur maximale de la fente est mesurée dans un plan, transversal et perpendiculaire à l'axe d'allongement de la fente, situé de préférence à mi-parcours de celle-ci.
- L'au moins une fente présente une largeur représentant au moins 10% de la largeur du guide de lumière, les largeurs de la fente et du guide de lumière étant ici mesurées dans un plan, transversal et perpendiculaire à l'axe d'allongement de la fente, situé de préférence à mi-parcours de celle-ci.
- Le guide de lumière présente une largeur maximale constante dans au moins les trois parties successives. Une largeur maximale constante dans toutes les parties du guide permet d'assurer que l'encombrement du guide est similaire à l'encombrement d'un guide ne se divisant pas en sous-guides. La largeur maximale est mesurée dans un plan transversal et perpendiculaire à l'axe d'allongement du guide de lumière.
- Les rayons lumineux sont destinés à être propagés depuis une extrémité du guide de lumière vers une autre extrémité du guide de lumière définissant un sens de propagation des rayons lumineux, les trois parties se succédant dans le sens de propagation des rayons lumineux.
- La première partie du guide de lumière présente un rayon de courbure principal supérieur au rayon de courbure principal suivi par la deuxième partie.
- La troisième partie du guide de lumière présente un rayon de courbure supérieur au rayon de courbure principal suivi par la deuxième partie.
- La première partie est sensiblement rectiligne.
- La troisième partie est sensiblement rectiligne.
- Les sous-guides présentent des largeurs, ou des diamètres, différents les uns des autres. Autrement dit, la fente n'est pas située régulièrement entre chaque sous-guide, ceci permet de concentrer au maximum les rayons lumineux dans la zone ombragée située au creux de la courbe suivie par la deuxième partie. La largeur ou le diamètre sont mesurés dans une section droite des sous-guides, c'est-à-dire selon un plan transversal des sous-guides et perpendiculaire à l'axe d'allongement des sous-guides.
- Le sous-guide présentant un rayon de courbure général le plus petit présente une largeur ou un diamètre inférieur au sous-guide présentant un rayon de courbure général plus grand.
- Au moins un des sous-guides présente une section transversale droite de forme demi-circulaire ou circulaire ou elliptique ou ovale ou rectangulaire ou trapézoïdale. Lorsque la forme est rectangulaire ou trapézoïdale, les angles entre des côtés adjacents peuvent être vifs ou arrondis. Par angle arrondi on signifie que deux cotés adjacents du rectangle ou du trapèze sont reliés par un congé. On comprend ici, et dans ce qui suit, que par section transversale droite, on entend une section dans un plan transversal perpendiculaire à la direction locale d'allongement du guide de lumière.
- Chaque sous-guide présente une section transversale droite de forme demi-circulaire ou circulaire ou elliptique ou rectangulaire ou ovale ou trapézoïdale.
- Le guide de lumière comprend un pont de matière s'étendant entre deux sous-guides adjacents. Ce pont de matière permet d'assurer une tenue des sous-guides en cas de vibrations.
- Le pont de matière s'étend tout le long de la fente.
- Le pont de matière suit le rayon de courbure principal de la fente.
- Le pont de matière présente une épaisseur ou hauteur maximale, qui est au moins quatre fois inférieure par rapport à une hauteur du guide de lumière. Plus précisément, on veut s'assurer que l'épaisseur maximale du pont de matière est inférieure à un quart de la hauteur du guide. Ce rapport permet de s'assurer que le pont de matière est petit par rapport aux sous-guides et qu'il n'a pas d'effet optique ou a un effet réduit sur la propagation des rayons lumineux. Par effet réduit, on comprend que la majorité, et par exemple plus de 75%, des rayons ayant pénétré dans un sous-guide continuent à se propager dans ce sous-guide et qu'au maximum 25% des rayons passent dans le pont.
- Le pont de matière présente sur au moins une de ses faces des éléments de réflexion. Ces éléments de réflexion participent à la réflexion des rayons lumineux, permettant de compenser la zone ombragée.
- Chaque sous-guide présente une face inférieure sur laquelle sont disposés des éléments de réflexion des rayons lumineux et une face supérieure, distincte de la face inférieure, à travers laquelle les rayons lumineux sortent. De cette manière, les sous-guides permettent de diffuser les rayons lumineux à travers leur face de sortie de rayon.
- Le rayon de courbure principal suivi par la deuxième partie est inférieur ou égal à N fois un diamètre du guide de lumière, avec N dépendant de l'indice optique du matériau de réalisation dudit guide de lumière. Ainsi, cela permet au guide de lumière de présenter un rayon de courbure dit faible tout en ne présentant pas de zone ombragée ou de fuite de rayon lumineux dans la partie courbe. Il est à noter que le diamètre du guide de lumière peut être mesuré dans la partie courbe du guide en prenant la somme des diamètres des sous-guides. On comprend que le rayon de courbure peut évoluer le long du guide de lumière, et par exemple le long de la deuxième partie. Il convient alors de s'assurer que pour chaque section transversale droite du guide de lumière, et ici au moins le long de la deuxième partie du guide de lumière, le rayon de courbure principal respecte le ratio par rapport au diamètre du guide de lumière.

L'invention a également pour objet un module lumineux pour véhicule automobile comprenant un guide de lumière tel que défini précédemment, et une source lumineuse, la source lumineuse étant placée à une extrémité du guide de lumière.

Le module lumineux peut comporter en outre un écran transparent ou translucide, derrière lequel est placé le guide de lumière.

D'autres caractéristiques et avantages de la présente invention apparaitront plus clairement à l'aide de la description et des dessins parmi lesquels :
- La figure 1A est une représentation schématique d'un guide de lumière présentant une partie courbe selon l'art antérieur ;
- La figure 1B est un agrandissement de la partie courbe du guide de lumière selon l'art antérieur illustré par la figure 1 ;
- Les figures 1C et 1D sont des représentations schématiques d'un guide de lumière de l'art antérieur traversé par des rayons lumineux respectivement ayant un rayon de courbure faible et un rayon de courbure plus grand, ces figures illustrant notamment les rayons sortant du guide de lumière par réfraction dans la partie courbe ;
- La figure 2 est une représentation schématique d'un guide de lumière selon l'invention ;
- La figure 3 est une vue de dessus de la partie courbe du guide de lumière selon la présente invention, montrant un premier mode de réalisation d'une fente ménagée dans la partie courbe du guide de lumière ;
- La figure 4 est une représentation schématique de la partie courbe du guide de lumière selon l'invention, sur laquelle des tracés schématiques des rayons lumineux traversant le guide de lumière sont représentés ;
- La figure 5 est une vue de dessus de la partie courbe du guide de lumière selon la présente invention, montrant un deuxième mode de réalisation d'une fente ménagée dans la partie courbe du guide de lumière ;

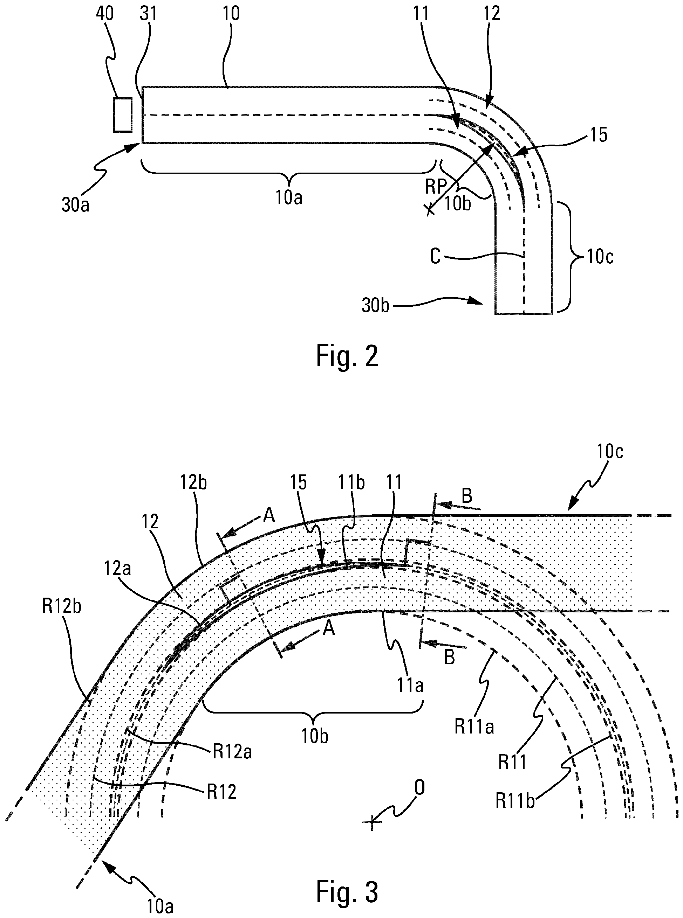

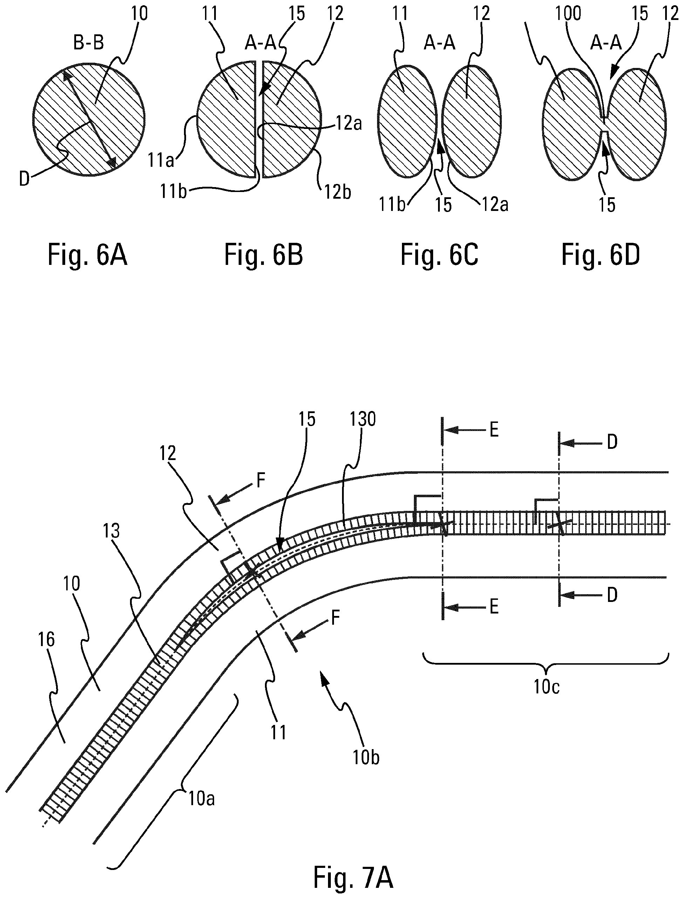

- Les figures 6A à 6D représentent des sections droites d'un guide de lumière selon l'invention prises selon les traits de coupe A-A et B-B montrés en figure 3, et où la figure 6A illustre une section droite d'une partie rectiligne du guide de lumière selon l'invention et où les figures 6B à 6D représentent des sections droites transversales d'une partie courbe du guide de lumière selon plusieurs variantes de réalisation de l'invention, une première variante où les sous-guides présentent une section en demi-cercle, une deuxième variante où les sous-guides présentent une section en ellipse et une troisième variante où les sous-guides présentent un pont de matière, ces sections ne représentant pas les éléments de réflexion dans un souci de clarté ;
- Les figures 7A à 7C illustrent le guide de lumière de la figure 4 avec une première disposition des éléments de réflexion, avec la figure 7A illustrant la partie courbe du guide de lumière selon l'invention vue de dessous et où les figures 7B et 7C illustrant des sections droites prises respectivement selon les traits de coupe D-D, E-E (figure 7B) et F-F (figure 7C) ;
- Les figures 8A à 8D illustrent le guide de lumière de la figure 4 avec une deuxième disposition des éléments de réflexion, avec la figure 8A illustrant la partie courbe du guide de lumière selon l'invention vue de dessous et où les figures 8B à 8D illustrant des sections droites prises respectivement selon les traits de coupe G-G, H-H et J-J.
- La figure 9 illustre un guide de lumière selon un mode de réalisation de l'invention destiné à être intégré à un module lumineux pour véhicule automobile.

Il faut tout d'abord noter que les figures exposent l'invention de manière détaillée pour mettre en oeuvre l'invention, lesdites figures pouvant bien entendu servir à mieux définir l'invention le cas échéant. Toutefois, il est à noter que ces figures n'exposent qu'une partie des variantes de réalisation possibles selon l'invention.

Dans la description qui va suivre, on se référera à une orientation en fonction du référentiel suivant : premièrement, on définit une direction d'allongement d'un élément, tel que le guide de lumière selon l'invention, par son axe principal d'extension, à savoir sa dimension la plus grande, comme la longueur. Deuxièmement on définit une largeur ou dimension transversale, perpendiculaire à la direction d'allongement, et s'étendant entre deux points les plus éloignés d'une section droite du guide de lumière tout en passant par le centre de cette section droite. Troisièmement, on définit une hauteur perpendiculaire à la fois à la direction d'allongement et à la largeur. La hauteur, distincte de la largeur, s'étend également entre deux points les plus éloignés d'une section droite du guide de lumière tout en passant par le centre de cette section. De préférence, la hauteur s'étend depuis une paroi du guide comprenant des éléments de réflexion. Ainsi, la direction d'allongement forme le premier axe du référentiel, la largeur forme le deuxième axe du référentiel et la hauteur le troisième axe du référentiel. Il est à noter que ce référentiel n'est pas limitatif de l'orientation que peut prendre le guide de lumière dans son application à un module lumineux de véhicule automobile. On comprend que l'orientation du référentiel choisi peut évoluer au fur et à mesure que l'on se déplace le long du guide et de la courbure de la portion de guide correspondante.

La figure 2 montre un guide de lumière 10 destiné à propager des rayons lumineux. Le guide de lumière 10 présente une forme tubulaire et comprend deux extrémités, parmi lesquelles une première extrémité 30a et une deuxième extrémité 30b. Plus précisément, une des extrémités du guide de lumière 10, ici la première extrémité 30a, comporte une face d'entrée 31 des rayons lumineux. Cette première extrémité 30a est destinée à coopérer avec une ou plusieurs sources lumineuse 40 émettant les rayons lumineux. Les rayons lumineux sont alors destinés à traverser la face d'entrée 31 puis à être propagés depuis la première extrémité 30a du guide de lumière 10 en direction de l'extrémité opposée, soit la deuxième extrémité 30b. Cette direction définit alors un sens de propagation des rayons lumineux à travers le guide de lumière.

Le guide de lumière 10 comporte également une face de réflexion des rayons lumineux parcourant le guide 10. Cette face de réflexion comporte des irrégularités, tel que par exemple des prismes qui renvoient les rayons lumineux vers une face de sortie du guide de lumière 10, sous un angle incident permettant leur réfraction hors du guide. La face de sortie des rayons lumineux réfractés est par exemple opposée à la face de réflexion, et se présente sous la forme d'une paroi partiellement cylindrique, c'est-à-dire une paroi définie par un glissement d'un profil ouvert sur une courbe guide, et qui s'étend d'une extrémité 30a à l'autre 30b du guide de lumière 10. Ces aspects seront détaillés plus loin dans la description. Sur les figures 2 à 4 notamment, le guide de lumière 10 est représenté de sorte que la face de réflexion n'est pas visible et que la face de sortie est la face du guide tournée vers le lecteur.

Il est à noter que la deuxième extrémité 30b peut supporter une surface réfléchissante permettant une réflexion des rayons lumineux vers l'intérieur du guide.

Le guide de lumière 10 comprend trois parties successives 10a, 10b, 10c suivant le sens de propagation des rayons lumineux, tel que défini ci-dessus. On distingue alors une première partie 10a dont la première extrémité 30a coopère avec la ou les sources lumineuses 40, une deuxième partie 10b présentant une courbe et située en sortie de la première partie 10a et une troisième partie 10c située en sortie de la deuxième partie 10b.

La deuxième partie courbe 10b suit un rayon de courbure principal RP, visible sur la figure 3 et qui sera décrit plus loin. Par ailleurs, selon l'exemple de réalisation représenté, toutes les parties 10a, 10b, 10c composant le guide de lumière 10 sont issues de matière, c'est-à-dire qu'elles forment un ensemble monobloc formant guide de lumière sans discontinuité. Selon une variante de réalisation, seules la deuxième partie 10b et la troisième partie 10c sont issues de matière, la première partie 10a étant alors rapportée.

La première partie 10a présente un rayon de courbure supérieur au rayon de courbure principal RP suivi par la courbe de la deuxième partie 10b. Plus précisément, dans l'exemple illustré, la première partie 10a est sensiblement rectiligne. Par sensiblement, on entend que la première partie 10a est rectiligne aux tolérances de fabrication près.

De la même manière, la troisième partie 10c présente un rayon de courbure supérieur au rayon de courbure principal RP suivi par la courbe de la deuxième partie 10b, et dans l'exemple illustré, la troisième partie 10c est sensiblement rectiligne.

Une fente 15 est ménagée dans la deuxième partie 10b du guide de lumière 10. La fente 15 divise la deuxième partie 10b du guide de lumière 10 en au moins deux sous-guides 11, 12, un premier sous-guide 11 situé à l'intérieur de la courbe et un deuxième sous-guide 12 situé à l'extérieur de la courbe. Les sous-guides 11, 12 finissent par se rejoindre, dans le sens de propagation des rayons défini précédemment, de manière à former la troisième partie 10c du guide de lumière 10. Plus précisément, les sous-guides 11, 12 se rejoignent à la fin de la deuxième partie 10b du guide de lumière 10, c'est-à-dire à la fin de la courbe suivie par la deuxième partie 10b. La fin de la courbe est définie lorsqu'une tangente à la courbe est au plus près d'un axe d'allongement principal C de la troisième partie 10c, sans toutefois être confondu avec cet axe d'allongement principal C. Par se rejoindre, on entend que les sous-guides 11, 12 sont issus de matière pour ne former qu'un guide unique.

Comme cela est visible sur les figures, et notamment en figure 2, la fente 15 et les sous-guides 11, 12 prennent naissance à la jonction entre la première partie 10a et la deuxième partie 10b du guide de lumière 10. Autrement dit, selon une réalisation, la fente 15 est ménagée uniquement dans la deuxième partie 10b, c'est-à-dire dans la partie courbe, du guide de lumière 10.

La figure 3 représente une portion du guide lumière selon l'invention, et notamment sa deuxième partie courbe 10b. Cette portion du guide est illustrée par la partie grisée, et les différents rayons de courbures de chacune des parois définissant cette portion courbe 10b ont été schématiquement représentés en pointillés, en étant notamment prolongés théoriquement au-delà de l'encadré pour faciliter la visualisation de chacun des rayons de courbure. Cette figure 3 montre également que la fente 15 est délimitée par des parois à la fois du premier sous-guide 11 et du deuxième sous-guide 12. Autrement dit, les sous-guides 11, 12 s'étendent le long de la fente 15.

Plus particulièrement, le premier sous-guide 11, dit interne, présente une paroi dite interne 11a, c'est-à-dire la paroi située le plus à l'intérieur de la courbe suivie par la deuxième partie 10b du guide de lumière 10 et une paroi dite externe 11b, c'est-à-dire la paroi située le plus à l'extérieur de cette courbe. On note que la paroi interne 11a suit un premier rayon de courbure R11a plus petit que le deuxième rayon de courbure P11b suivi par la paroi externe 11b, ces rayons de courbures R11a, R11b étant issus de cercles concentriques c'est-à-dire de cercles ayant le même centre O. On peut alors définir un premier rayon de courbure général R11 du premier sous-guide 11, ce premier rayon de courbure général étant la moyenne du premier rayon de courbure R11a et du deuxième rayon de courbure R11b.

De la même manière, le deuxième sous-guide 12, dit externe, présente une paroi dite interne 12a, c'est-à-dire la paroi située le plus à l'intérieur de la courbe et une paroi dite externe 12b, c'est-à-dire la paroi située le plus à l'extérieur de la courbe. On note que la paroi interne 12a suit un troisième rayon de courbure R12a plus petit que le quatrième rayon de courbure R12b suivi par la paroi externe 12b, ces rayons de courbures R12a, R12b étant issus de cercles concentriques c'est-à-dire de cercles ayant le même centre O. On peut alors définir un deuxième rayon de courbure général R12 du deuxième sous-guide 12, ce deuxième rayon de courbure général étant la moyenne du troisième rayon de courbure R12a et du quatrième rayon de courbure R12b.

Il est à noter que le premier rayon de courbure général R11 du premier sous-guide 11 et le deuxième rayon de courbure général R12 du deuxième sous-guide 12 sont tous deux mesurés dans des cercles concentriques de centre O. Le premier rayon de courbure général R11 du premier sous-guide 11 est inférieur au deuxième rayon de courbure général R12 du deuxième sous-guide 12.

Tel que cela a pu être évoqué précédemment, il convient de noter que la paroi externe 11b du premier sous-guide 11 et la paroi interne 12a du deuxième sous-guide 12 participent ensemble à définir la fente 15.

On note également que la fente 15 présente une forme de croissant de lune s'étendant, selon sa longueur, en suivant un rayon de courbure, dit rayon de courbure principal de la fente RF. Ce rayon de courbure principal de la fente RF est la moyenne du premier rayon de courbure général R11 du premier sous-guide 11 et du deuxième rayon de courbure général R12 du deuxième sous-guide 12. Autrement dit, la fente 15 présente un rayon de courbure principal RF étant égal à la moyenne des rayons de courbure généraux de deux sous-guides adjacents 11, 12. Plus particulièrement, le rayon de courbure principal de la fente RF est mesuré dans un cercle concentrique aux cercles définissant les rayons de courbures R11a, R11b, R11 du premier sous-guide 11 et/ou aux cercles définissant les rayons de courbures R12a, R12b, R12 du deuxième sous-guide 12.

Les sous-guides 11 ,12 s'étendent à la fois le long et dans le sens de la forme courbe de la fente 15, selon leur direction d'allongement.

On peut également définir que la courbe suivie par la deuxième partie 10b présente un rayon de courbure principal RP étant une moyenne du plus petit rayon de courbure d'un des sous-guide et du plus grand rayon de courbure d'un des sous-guides. Selon l'exemple de réalisation illustré par la figure 2, où il y a une seule fente 15, le rayon de courbure principal RP est confondu avec le rayon de courbure principal de la fente RF. On comprend qu'un décalage peut exister entre le rayon de courbure principal RP du guide et le rayon de courbure principal de la fente RF, ces deux rayons de courbures étant inscrits dans des cercles concentriques ayant le même centre O.

Dans une variante non représentée, certains cercles décrits dans le cadre de la figure 3 peuvent ne pas être concentriques, c'est-à-dire que leurs centres respectifs sont situés à des endroits différents.

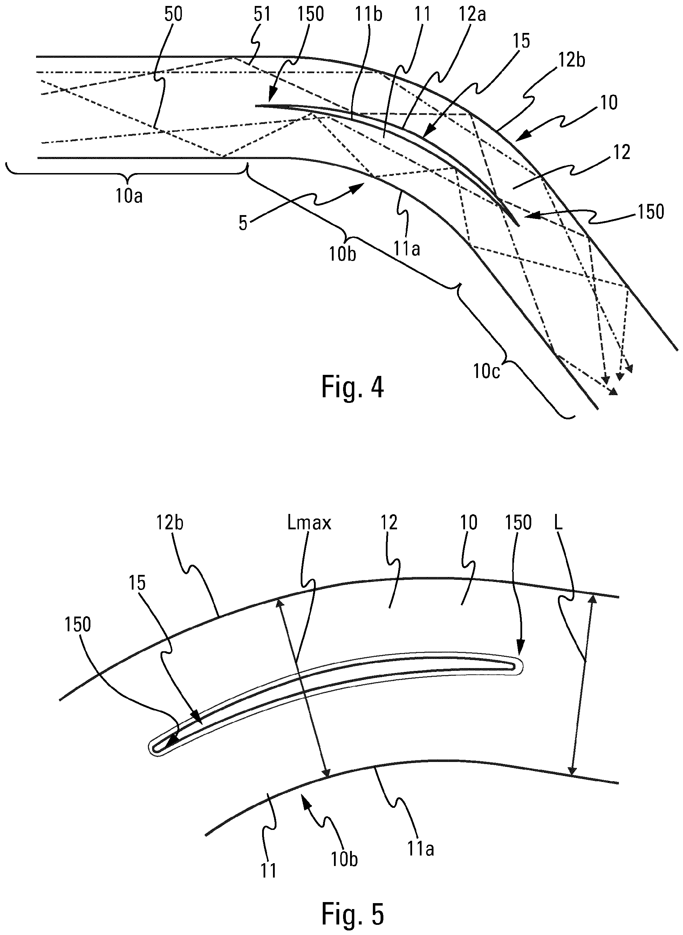

Le rayon de courbure principal RP de la courbe suivie par la deuxième partie 10b du guide de lumière 10 peut être inférieur ou égal à N fois un diamètre D du guide, avec N pouvant varier en fonction de l'indice optique du matériau dans lequel est réalisé le guide de lumière 10, N pouvant notamment être compris entre 4 et 5. Un tel rayon de courbure est dit faible, mais la présence d'une ou de plusieurs fentes 15 s'étendant au moins dans la deuxième partie courbe 10b du guide 10 permet de s'affranchir de toute zone ombragée tout en assurant un bon rendement optique, comme cela sera décrit en référence avec la figure 4. Le diamètre D du guide 10 est notamment mesuré dans une section transversale du guide réalisée dans la première 10a ou dans la troisième 10c partie du guide de lumière 10.

Selon l'invention, le guide de lumière présente, d'une extrémité à l'autre selon la direction d'allongement, des dimensions transversales telles que le guide de lumière est contenu dans une enveloppe de diamètre égal ou légèrement supérieur à ce diamètre D, de sorte que l'on comprend que dans la deuxième partie courbe 10b du guide, la somme des dimensions latérales, ou largeurs, des sous-guides 11, 12 est inférieure, ou sensiblement égale, à ce diamètre D. En pratique, la différence entre le diamètre et la somme des dimensions latérales, ou largeurs, des sous-guides étant égale à la dimension latérale, ou la largeur, de la fente. Cette caractéristique sera notamment décrite en d'autres termes ci-après, en référence à la figure 5.

Le guide de lumière 10 peut être réalisé d'un seul tenant, en polymère transparent, et par exemple en polycarbonate (PC) ou en polyméthacrylate de méthyle (PMMA), ou en tout autre polymère approprié, c'est-à-dire dans un matériau transparent qui peut être traversé par les rayons de lumière émis par la source de lumière 40. Les matériaux cités présentent des résistances thermiques différentes tout en ayant des performances optiques permettant la propagation des rayons lumineux. Il est à noter que le PMMA présente une meilleure transparence par rapport au PC. L'indice optique du polycarbonate (PC) est sensiblement égal à 1.59, et l'indice optique du polyméthacrylate de méthyle (PMMA) est sensiblement égal à 1.49. Il convient de noter que plus l'indice du matériau utilisé pour la fabrication des guides de lumière est élevé, plus le rapport entre le rayon de courbure et le diamètre du guide, à savoir la valeur N précédemment citée, peut diminuer. L'expérience montre qu'un tel rapport allant de 4 pour le polycarbonate (PC) à 5 pour le polyméthacrylate de méthyle (PMMA) est acceptable tant pour le rendement photométrique que pour l'aspect allumé dans le coude. La zone ombragée à l'intérieur de la partie courbée telle qu'elle a pu être présentée précédemment est alors suffisamment réduite.

La figure 4 illustre, de manière schématique, le parcours des rayons lumineux, notamment au sein de la deuxième partie courbe 10b du guide de lumière 10 selon l'invention. Afin de mieux les différencier, chaque rayon est représenté par des motifs différents.

Tout d'abord, on observe que la présence de la fente 15 permet d'offrir une surface de réflexion supplémentaire par rapport à l'art antérieur. Plus précisément, en suivant le rayon lumineux référencé 50, on peut voir qu'après réflexions totales dans la première partie 10a du guide de lumière 10, le rayon lumineux 50 est totalement réfléchi par la paroi externe 11b du premier sous-guide 11 en direction de la paroi interne 11a du premier sous-guide 11, c'est-à-dire au niveau du creux de la courbe suivie par la deuxième partie 10b du guide. Ainsi, la présence de la fente 15 permet de diriger des rayons lumineux en direction d'une zone interne 5 située dans le creux de la deuxième partie courbe 10b et permet ainsi d'éviter la présence d'une ombre dans cette zone interne 5, même lorsque cette partie courbe suit un rayon de courbure faible.

Ensuite, en suivant le rayon lumineux référencé 51, on peut voir qu'après réflexions totales dans la première partie 10a du guide de lumière 10, le rayon lumineux 51 est totalement réfléchi par la paroi externe 12b du deuxième sous-guide 12 vers la paroi interne 12a du deuxième sous-guide 12, c'est-à-dire vers l'intérieur du guide de lumière 10.

Ainsi, la présence de la fente 15 et la division du guide de lumière 10 en une pluralité de sous-guides au moins dans la deuxième partie courbe 10b permet à la fois de s'affranchir de la zone dite ombragée et de réduire de manière significative la perte de lumière due à la réfraction des rayons lumineux dans la deuxième partie courbe 10b, en assurant une homogénéité de la propagation des rayons lumineux dans chacun des sous-guides de part et d'autre de la fente.

Selon une variante de réalisation, non illustrée par les figures, le guide de lumière 10 peut comprendre plusieurs fentes 15 ménagées au moins dans la deuxième partie courbe 10b du guide de lumière 10, ces fentes étant décalées les unes par rapport aux autres dans cette partie courbe de manière à être successivement de plus en plus éloignées de la zone interne 5. Ces fentes 15 définissent alors au moins trois sous-guides. Les fentes 15 présentent, entre elles, des rayons de courbures principaux de fente RF plus ou moins grands inscrits respectivement dans des cercles concentriques et en étant égal à la moyenne des rayons de courbure généraux des deux sous-guides adjacents.

Dans le cadre de cette variante, les sous-guides peuvent présenter des sections différentes les uns par rapport aux autres. On entend par là, qu'une largeur des sous-guides varie d'un sous-guide à l'autre. Autrement dit, les fentes 15 ne sont pas régulièrement réparties entre chaque sous-guide. Ceci permet de concentrer au maximum les rayons lumineux dans la zone dite ombragée située au creux de la courbe suivie par la deuxième partie 10b du guide de lumière 10. De préférence, le sous-guide présentant le rayon de courbure général le plus faible présente la largeur la plus petite par rapport à l'ensemble des sous-guides, et le sous-guide présentant le rayon de courbure général le plus grand, présente la largeur la plus grande par rapport à l'ensemble des sous-guides. Selon une réalisation, plus on s'éloigne du creux de la courbe, plus la largeur des sous-guides augmentent. Bien entendu, l'ensemble des mesures des largeurs est réalisé dans un même plan, ce plan étant perpendiculaire à la direction d'allongement du sous-guide en question. Et l'on comprend que lorsque les sous-guides 11, 12 présentent des sections circulaires, la dimension à considérer est le diamètre de ces sous-guides.

Selon une réalisation, le sous-guide présentant le rayon de courbure général le plus petit, c'est-à-dire le sous-guide interne 11 situé au plus près du creux de la courbe suivie par la deuxième partie 10b, peut présenter une largeur inférieure à celle d'un autre sous-guide, et notamment celle d'un sous-guide présentant le rayon de courbure général le plus grand, c'est-à-dire le sous-guide externe 12 le plus éloigné du creux de la courbe suivie par la deuxième partie 10b. Il est entendu que la largeur d'un sous-guide est mesurée dans une section sensiblement droite dudit sous-guide donné, une section droite étant définie comme une coupe transversale, perpendiculaire à la direction d'allongement du sous-guide donné. Dans le cas où les sous-guides 11, 12 présentent une section circulaire, on comprend que la largeur mesurée consiste en le diamètre de chaque sous-guide.

La figure 5 montre qu'une largeur maximale Lmax du guide de lumière 10 est mesurée dans un plan transversal au guide de lumière 10 et perpendiculaire à l'axe d'allongement du guide 10. Autrement dit, la largeur maximale Lmax est mesurée dans une section droite du guide de lumière 10. Plus précisément, la largeur maximale Lmax de la deuxième partie 10b est mesurée entre la paroi interne 11a du premier sous-guide 11, celui situé au plus près du creux de la courbe, et la paroi externe 12b du deuxième sous-guide 12, celui situé au plus loin du creux de la courbe. La largeur Lmax de la deuxième partie 10b du guide de lumière 10 est généralement légèrement plus grande que la largeur L mesurée dans la première partie 10a et/ou dans la troisième partie 10c du guide de lumière 10. L'écart de largeur entre la deuxième partie 10b et les autres parties 10a, 10c du guide est compris entre 1 millimètre et 20 millimètres, notamment entre 2 millimètres et 10 millimètres. Selon une variante de réalisation, la largeur L est constante dans toutes les parties 10a, 10b, 10c du guide de lumière 10, c'est-à-dire que la largeur Lmax est égale à la largeur L. Cette constance de largeur L permet de s'assurer que le guide de lumière 10 présente un encombrement minimal.

Dans un souci d'encombrement, il est également à noter que le guide de lumière 10 et les sous-guides 11, 12 présentent une hauteur identique.

Par ailleurs, la figure 5 illustre un mode de réalisation où la fente 15 présente deux extrémités longitudinales 150 arrondies, alors que dans le mode de réalisation illustré par les figures 3 ou 4, les deux extrémités longitudinales 150 de la fente 15 sont biseautées. Une extrémité longitudinale 150 est définie comme étant le point de naissance de la fente 15. En fonction de la forme de la fente 15, ce point de naissance peut être situé sur le rayon de courbure principal de cette fente RF. Il est à noter que des extrémités longitudinales 150 arrondies facilitent un moulage et un démoulage des sous-guides 11, 12 lors de la fabrication du guide de lumière 10.

Entre ces deux extrémités longitudinales 150, la fente 15 peut présenter une largeur qui augmente (par exemple visible sur la figure 4) ou une largeur constante, la largeur étant définie selon le référentiel précédent. De préférence, la fente 15 présente une largeur minimale d'au moins deux millimètres. Cette largeur minimale, ici d'au moins deux millimètres, participe au bon moulage et démoulage lors de la fabrication du guide de lumière 10. La largeur de la fente 15 est mesurée dans un plan transversal et perpendiculaire à l'axe d'allongement principal de la fente 15, ce plan étant situé de préférence à mi-parcours de la fente 15.

Les figures 6B à 6D montrent des sections droites de différentes variantes de réalisation des sous-guides 11, 12 de l'invention faite selon la section AA montré en figure 3, en comparaison avec la figure 6A qui montre une section droite du guide de lumière 10 prise dans la section BB montré en figure 3, c'est-à-dire prise dans la première partie 10a ou dans la troisième partie 10c du guide de lumière 10. On remarque que les sous-guides peuvent présenter des sections transversales en forme de demi-cercle (figure 6B), circulaire, elliptique (figures 6C, 6D), ovale, voire même rectangulaire ou trapézoïdale, avec des angles vifs ou arrondis entre des côtés adjacents. Par angle arrondi on signifie que deux cotés adjacents du rectangle ou du trapèze sont reliés par un congé.

La figure 6B, où chaque sous-guide 11, 12 présente une section transversale en forme de demi-cercle, montre que la paroi externe 11b du premier sous-guide 11 et la paroi interne 12a du deuxième sous-guide 12, participant à délimiter toutes les deux la fente 15, présentent des faces planes s'étendant dans des plans parallèles l'un par rapport à l'autre. Selon la section, la fente 15 présente une forme rectangulaire, traversant de part en part le guide de lumière 10, notamment selon la hauteur telle que défini précédemment.

La figure 6C, où chaque sous-guide 11, 12 présente une section transversale de forme elliptique, montre que la paroi externe 11b du premier sous-guide 11 et la paroi interne 12a du deuxième sous-guide 12, participant à délimiter toutes les deux la fente 15, présentent des faces en tronçons d'ellipses. Dans la section transversale droite illustrée, la fente 15 se présente alors sous une forme traversant de part en part le guide de lumière 10 et présentant une largeur minimale vers le milieu du guide dans le sens de la hauteur.

Selon un mode de réalisation illustré par les figures 2 à 6C, la fente 15 traverse de part en part le guide de lumière 10 et notamment la deuxième partie 10b de manière à séparer les sous-guides 11, 12 les uns des autres. Ainsi, les sous-guides 11, 12 sont indépendants les uns des autres. On peut également définir que la fente 15 définit un passage entre deux sous-guides adjacents 11, 12, ce passage s'étendant sur toute la hauteur du guide de lumière 10 telle que définie selon le référentiel. En d'autres termes, la fente 15 s'étend sur toute la hauteur du guide de lumière 10.

En variante, la paroi externe 11b du premier sous-guide 11 et la paroi interne 12a du deuxième sous-guide 12 ont des formes courbées différentes d'une ellipse. Avantageusement les formes courbées sont telles que, lorsque qu'on parcourt du bas vers le haut la hauteur du guide, la largeur de la fente se réduit puis augmente à nouveau. Alternativement cette largeur pourrait uniquement se réduire ou uniquement augmenter.

Un autre mode de réalisation illustré par la figure 6D, montre que le guide de lumière 10, et notamment la deuxième partie 10b, comprend un pont de matière 100 s'étendant entre deux sous-guides adjacents 11, 12. Les sous-guides 11, 12 présentent ici une section en ellipse, mais pourraient, bien entendu présenter n'importe quelle autre section, comme notamment une section en demi-cercle. En d'autres termes, on peut définir que deux fentes 15 sont ménagées de part et d'autre du pont de matière 100. Ces deux fentes 15 présentent un même rayon de courbure principal tel qu'il a été précédemment défini. Dans l'exemple illustré sur la figure 6D les deux fentes 15 sont symétriques l'une par rapport à l'autre et par rapport au pont de matière 100, qui permet par ailleurs d'assurer une tenue mécanique des sous-guides 11, 12 entre eux en cas de vibrations. Dans un mode de réalisation alternatif, les deux fentes 15 sont dissymétriques par rapport au pont de matière 100, l'une d'entre elles présentant une dimension supérieure à l'autre, c'est-à-dire que le pont de matière est décentré. Dans un autre mode de réalisation alternatif le pont de matière est situé à une extrémité des sous-guides, par exemple tangent aux deux sous-guides. Il n'y a alors qu'une seule fente 15, non débouchante là où un pont de matière 100 est présent.

Avantageusement, le pont de matière 100 présente une hauteur, telle que définie précédemment, au moins 4 fois inférieure à la hauteur du guide de lumière 10, de sorte que l'épaisseur maximale du pont de matière est inférieure à un quart de la hauteur du guide de lumière. Ce rapport permet de s'assurer que le pont de matière 100 est petit par rapport au guide 10 de manière à ce qu'il n'ait pas d'effet optique sur la propagation des rayons lumineux à travers les sous-guides 11, 12. Avantageusement, le pont de matière 100 représente moins de 20% du diamètre D d'un des sous-guides 11, 12 à partir duquel le pont de matière 100 s'étend. Par ailleurs il est souhaitable d'assurer que ce pont présente une hauteur d'au moins 1 ou 2mm pour assurer un bon moulage.

Avantageusement le pont de matière s'étend sur toute la longueur de la fente. En variante il peut présenter une ou plusieurs interruptions dans le sens de propagation des rayons lumineux.

Dans les différents exemples illustrés, on peut noter que les sections des sous-guides 11, 12 sont symétriques l'une par rapport à l'autre avec, notamment, la fente 15 définissant l'axe de symétrie, étant entendu qu'il convient de noter que cette caractéristique est optionnelle.

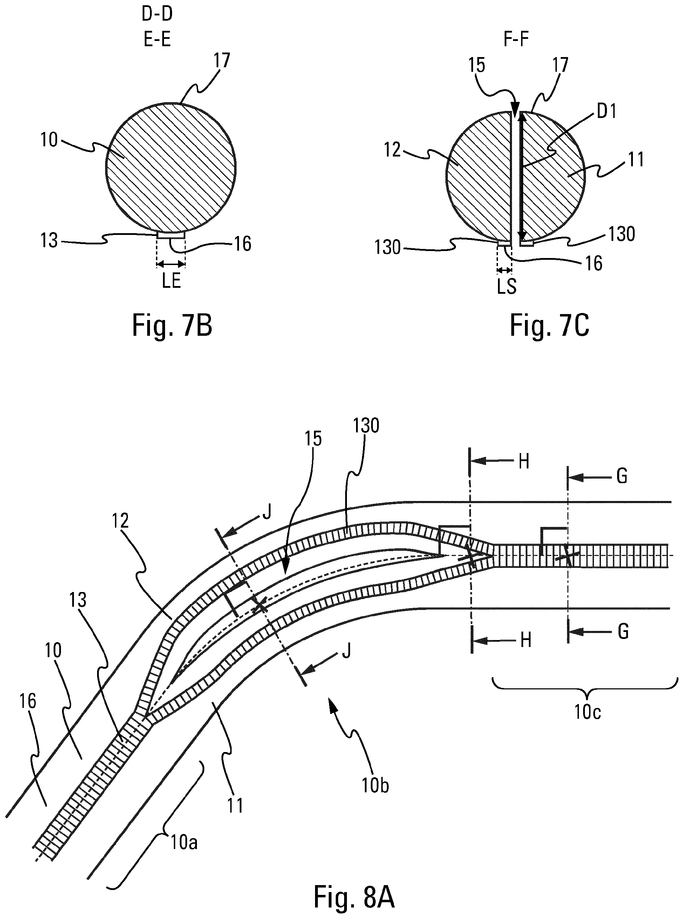

Par ailleurs, les figures 7A et 8A, représentant le guide de lumière vue de dessous et selon deux modes de réalisation de l'invention, montrent que le guide de lumière 10 présente, dans l'ensemble de ses parties 10a, 10b et 10c, une face inférieure 16 non régulière, sur laquelle sont disposés des éléments 13 autorisant la réflexion des rayons lumineux. Ces éléments de réflexion 13 permettent d'éviter une propagation rectiligne des rayons lumineux le long du guide de lumière 10 et imposent aux rayons lumineux des angles de réflexion permettant une réfraction par la face opposée, c'est-à-dire sur une face de sortie du guide de lumière 10.

Ces éléments 13 sont disposés au moins sur une partie des parois délimitant le guide de lumière 10. Les éléments 13 autorisant la réflexion sont par exemple des prismes ménagés sur la face de réflexion du guide de lumière 10. Ces prismes peuvent être répartis uniformément le long du guide de lumière 10.

Lorsque le guide de lumière 10 se divise en sous-guides 11, 12, les éléments de réflexion 13 se divisent également en sous-éléments de réflexion 130. Plus précisément, les figures 7B et 7C, illustrant des sections du guide de lumière 10 montré en figure 7A, montrent que ces sous-éléments de réflexion 130 s'étendent de part et d'autre de la fente 15 et présentent une largeur LS strictement inférieure à la largeur LE d'un élément de réflexion 13 situé sur la première partie 10a ou la troisième partie 10c. Avantageusement la largeur LS est sensiblement égale à la moitié de la largeur LE. Selon cet exemple de réalisation où les sous-guides 11, 12 présentent une section transversale en forme de demi-cercle, avec une fente 15 qui présente une largeur constante sur toute la hauteur du guide de lumière, les sous-éléments de réflexion 130 sont disposés sur le bord de ce demi-cercle, relativement au diamètre D1. En d'autres termes, les sous-éléments de réflexion 130, adjacents à la fente 15, ne sont séparés les uns des autres que de la largeur de la fente. Une fois la deuxième partie courbe 10b passée, c'est-à-dire à compter de la troisième partie 10c, les sous-éléments 130 de réflexion se rejoignent pour ne former qu'un élément de réflexion 13, ayant, de préférence, les mêmes dimensions et propriétés que les éléments de réflexion situés dans la première partie 10a du guide 10.

Ces figures 7B et 7C mettent également en évidence que le guide de lumière 10 comprend une face supérieure 17 dite face de sortie et au travers de laquelle les rayons lumineux sont réfractés afin de sortir du guide de lumière 10. Cette face de sortie 17 est distincte de la face inférieure 16, dite de réflexion, et se situe ici à l'opposée l'une de l'autre. Autrement dit, la face de réflexion 16 et la face de sortie 17 sont diamétralement opposée. Il est à noter que la présence de la fente 15 et la division du guide 10 en sous-guides 11, 12 permettent de limiter la fuite des rayons lumineux par d'autres faces du guide de lumière 10 que la face de sortie 17.

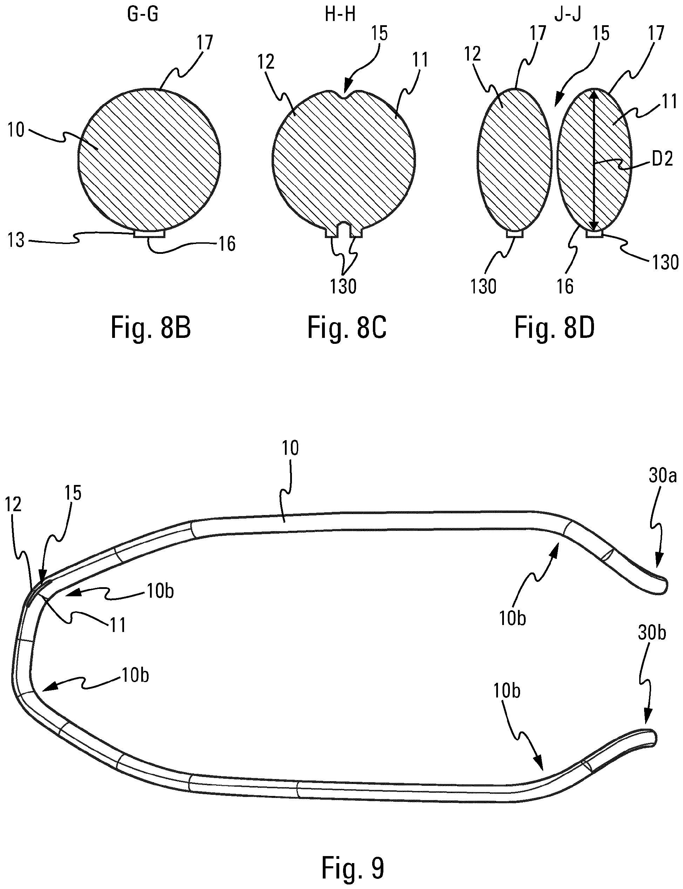

La figure 8A montre une variante de réalisation où les sous-éléments de réflexion 130 sont disposés sur la face de réflexion 16 de chaque sous-guide 11, 12, cette fois de manière centrée transversalement par rapport à chaque sous-guide, à tout le moins dans la partie centrale de la deuxième partie du guide de lumière, lorsque la section des sous-guides est dans sa forme définitive. Comme le montre les figures 8B à 8D, cette variante de réalisation est particulièrement bien adaptée dans le cas où les sous-guides présentent une section en ellipse. Bien entendu, cette variante de réalisation pourrait être adaptée à d'autres types de section des sous-guides 11, 12.

Il est à noter que dans la deuxième partie courbe 10b du guide de lumière 10, les sous-éléments de réflexion 130 sont disposés au milieu de la face de réflexion 16 du sous-guide 11, 12. Plus précisément, comme le montre la figure 8D, les sous-éléments de réflexion 130 sont disposés selon le grand axe D2 de l'ellipse formée par un sous-guide 11, 12.

La figure 8C met en évidence que le passage entre la deuxième partie 10b et la première partie 10a ou la troisième partie 10c illustrée par la figure 8B est progressif. Plus particulièrement, on peut voir en figure 8C la naissance des sous-guides 11, 12 et de la fente 15. On note que les sous-éléments de réflexion 130 sont, dès le début de la courbe 10b, séparés les uns des autres.

Par ailleurs, en présence du pont de matière 100 le long de la courbe suivie par la deuxième partie 10b du guide 10, ce pont de matière 100 peut présenter sur au moins une de ses faces, des éléments de réflexion 13. De préférence, la face du pont de matière 100 comprenant les éléments de réflexion 13 est la face située à l'opposé de la face de sortie 17 des sous-guides 11, 12.

La figure 9 illustre un guide de lumière 10 selon l'invention destiné à être intégré à un module lumineux pour véhicule automobile. Ce guide de lumière 10 comprend deux extrémités 30a, 30b et plusieurs parties courbes 10b.Une source de lumière peut être prévue en regard de chacune des extrémités 30a, 30b du guide de lumière. Une fente 15 divisant le guide de lumière 10 en plusieurs sous-guides 11, 12 est ménagée dans au moins une de ces parties courbes 10b. Bien entendu, le guide de lumière 10 peut comprendre une fente 15 divisant le guide de lumière 10 en plusieurs sous-guides 11, 12 dans chacune de ses parties courbes 10b.

La description qui précède explique clairement comment l'invention permet d'atteindre les objectifs qu'elle s'est fixés et notamment de proposer un guide de lumière courbe dans lequel l'aspect visuel est maîtrisé en s'affranchissant de zone d'ombre lorsque le rayon de courbure est faible et limitant la réfraction des rayons lumineux dans des zones non souhaitées du guide de lumière. Un tel guide de lumière 10 peut avantageusement être intégré à un module lumineux pour véhicule automobile, le rendement optique sera alors optimal pour réaliser la fonction d'éclairage et/ou de signalisation souhaitée. Dans un module lumineux selon un aspect de l'invention, le guide peut être directement visible depuis l'extérieur à travers la glace du dispositif. Avantageusement il est disposé derrière un écran transparent ou translucide et diffusant la lumière soit par la présence d'une texture ou de motifs optiques en surface, soit par sa réalisation en une matière diffusante, ou encore par une combinaison de ces caractéristiques.

## Revendications

1. Guide de lumière (10) destiné à propager des rayons lumineux émis depuis au moins une source lumineuse (40), le guide de lumière (10) comprenant au moins trois parties (10a, 10b, 10c) successives selon un sens de propagation des rayons lumineux depuis la ou les sources lumineuses (40), les trois parties successives (10a, 10b, 10c) étant :
- une première partie (10a),
- une deuxième partie (10b) située en sortie de la première partie (10a), la deuxième partie (10b) suivant une courbe définie selon un rayon de courbure principal (RP), et
- une troisième partie (10c) située en sortie de la deuxième partie (10b),
**caractérisé en ce qu'**au moins une fente (15) est ménagée dans la deuxième partie (10b), la ou les fente(s) (15) définissant au moins deux sous-guides (11, 12), lesdits sous-guides (11,12) se rejoignant de manière à former la troisième partie (10c) du guide de lumière (10).

2. Guide de lumière selon la revendication 1, **caractérisé en ce que** la deuxième partie (10b) et la troisième partie (10c) sont issues de matière.

3. Guide de lumière selon l'une quelconque des revendications précédentes, **caractérisé en ce que** chaque sous-guide (11, 12) présente un rayon de courbure, dit rayon de courbure général (R11, R12), inscrit dans un cercle concentrique à un cercle dans lequel est inscrit le rayon de courbure principal (RP) définissant la courbe suivie par la deuxième partie (10b).

4. Guide de lumière selon l'une quelconque des revendications précédentes, **caractérisé en ce que** l'au moins une fente (15) suit un rayon de courbure principal (RF) confondu avec le rayon de courbure principal (RP) définissant la courbe suivie par la deuxième partie (10b).

5. Guide de lumière selon l'une quelconque des revendications précédentes, **caractérisé en ce que** l'au moins une fente (15) présente au moins une extrémité arrondie ou biseautée.

6. Guide de lumière selon l'une quelconque des revendications précédentes, **caractérisé en ce qu'**il présente une largeur maximale (Lmax) constante dans au moins les trois parties (10a, 10b, 10c) successives.

7. Guide de lumière selon l'une quelconque des revendications précédentes, **caractérisé en ce que** la première partie (10a) du guide de lumière (10) présente un rayon de courbure principal supérieur au rayon de courbure principal (RP) suivi par la deuxième partie (10b).

8. Guide de lumière selon l'une quelconque des revendications précédentes, **caractérisé en ce que** la troisième partie (10c) du guide de lumière (10) présente un rayon de courbure supérieur au rayon de courbure principal (RP) suivi par la deuxième partie (10b).

9. Guide de lumière selon l'une quelconque des revendications précédentes, **caractérisé en ce que** les sous-guides présentent des largeurs, ou des diamètres, différents les uns des autres.

10. Guide de lumière selon la revendication précédente, **caractérisé en ce que** le sous-guide (11) présentant un rayon de courbure général (R11) le plus petit présente une largeur ou un diamètre inférieur au sous-guide (12) présentant un rayon de courbure général (R12) plus grand.

11. Guide de lumière selon l'une quelconque des revendications précédentes, **caractérisé en ce que** chaque sous-guide (11, 12) présente une section transversale droite de forme demi-circulaire ou circulaire ou elliptique ou rectangulaire ou ovale ou trapézoïdale.

12. Guide de lumière selon l'une quelconque des revendications précédentes, **caractérisé en ce que** l'au moins une fente (15) s'étend sur toute une hauteur du guide de lumière (10).

13. Guide de lumière selon l'une quelconque des revendications 1 à 11, **caractérisé en ce que** le guide de lumière (10) comprend un pont de matière (100) s'étendant entre deux sous-guides adjacents (11, 12).

14. Guide de lumière selon l'une quelconque des revendications précédentes, **caractérisé en ce que** le rayon de courbure principal (RP) suivi par la deuxième partie (10b) est inférieur ou égal à N fois un diamètre (D) du guide de lumière (10), avec N étant fonction de l'indice optique du matériau de réalisation dudit guide de lumière (10).

15. Module lumineux pour véhicule automobile comprenant :
- un guide de lumière (10) tel que défini selon l'une quelconque des revendications précédentes, et
- une source lumineuse (40), la source lumineuse étant placée à une extrémité (30a, 30b) du guide de lumière (10).

16. Module lumineux selon la revendication précédente, **caractérisé en ce qu'**il comporte un écran transparent ou translucide, derrière lequel est placé le guide de lumière (10).
